# EUROPEAN PATENT APPLICATION

(11) **EP 2 398 067 A2**
(43) Date of publication of application: **21.12.2011**
(21) Application number: 11165524.7
(22) Date of filing: 10.05.2011
(51) Int. Cl.: H01L 31/042

(54) **System and method for photovoltaic plant power curve measurement and health monitoring**

(30) Priority: 12.05.2010 US 778309
(71) Applicant: General Electric Company, Schenectady, NY 12345 (US)
(72) Inventor: Roesner, Robert, Niskayuna, NY 12309 (US); El-Barbari, Said Farouk Said, Niskauna, NY 12309 (US)
(74) Representative: Bedford, Grant Richard

(57) **Abstract**

A photovoltaic (PV) plant (10) power curve measurement system determines normalized irradiation data in response to algorithmic software based on measured or calculated irradiance at one or more desired PV plant (10) locations. The measurement system also measures PV plant (10) electrical power and generates an estimated power curve map of corresponding photovoltaic plant (10) electrical power as a function of the normalized irradiation data and the measured PV plant (10) electrical power, such that corresponding power curve data can be compared to historical, theoretical or simulated power curve data based on normalized irradiation data for the photovoltaic plant (10) to detect degradation of the photovoltaic plant (10) in a desired time frame.

## Description

The invention relates generally to health and performance monitoring of photovoltaic plants and more particularly to a system and method for monitoring the health of a photovoltaic plant based on a calculated power curve for the photovoltaic plant.

There presently is no known scheme for monitoring a photovoltaic plant as a complete system. Current industrial techniques use monthly or yearly energy generation tracking. The resultant numbers are compared on an industry wide basis to provide a better understanding of system performance. This technique disadvantageously results in long time intervals associated with receipt of feedback information that make scheduled maintenance impracticable or impossible to achieve due to unavailability of early warning signals. Performance of photovoltaic plant systems, particularly annual energy production, is currently evaluated based solely on simulation results. The long time interval generation tracking is used to get around the uncertainty introduced by varying ambient conditions like irradiation and temperature for example.

Modem industry-wide statistics based on annual energy production are used to determine a relative performance indicator. Conclusory results are particularly difficult to determine because conditions vary to a great degree based on factors such as the type of photovoltaic panel(s) used, plant layout(s), and geographical location(s). Comparing new data to historical data is also difficult since weather conditions are constantly changing from year to year. Analysis techniques based on annual energy production therefore do not provide very much detail regarding overall photovoltaic plant health.

In view of the foregoing, it would be advantageous to provide a system and method for providing reliable and accurate real time measurements of overall photovoltaic plant performance.

Briefly, in accordance with one embodiment of the present invention, a photovoltaic plant power curve measurement system comprises: one or more solar panels; a power grid; one or more power converters configured to receive DC electrical power from the one or more solar panels and deliver AC electrical power to the power grid; and a monitoring system configured to determine normalized irradiation data in response to an algorithmic software based on measured or calculated irradiance at one or more desired PV plant locations, and further configured to measure PV plant electrical power and generate an estimated power curve map for the PV plant as a function of the normalized irradiation data and the measured PV plant electrical power, such that corresponding power curve data can be compared to at least one of historical power curve data, theoretical power curve data, and simultated power curve data based on normalized irradiation data for the PV plant to detect degradation of the PV plant in a desired time frame.

According to another embodiment, a photovoltaic plant signal curve measurement system comprises: one or more solar panels; a power grid; one or more power converters configured to receive DC electrical power from the one or more solar panels and deliver AC electrical power to the power grid; and a monitoring system configured to determine normalized irradiation data in response to an algorithmic software based on measured or calculated irradiance at one or more desired PV plant locations, and further configured to measure desired PV plant electrical signals and generate an estimated signal curve map for the PV plant as a function of the normalized irradiation data and the measured PV plant electrical signals, such that corresponding PV plant electrical signal data can be compared to at least one of historical, theoretical or simulated PV plant electrical signal data based on normalized irradiation data for the PV plant to detect degradation of at least a portion of the PV plant in a desired time frame.

According to yet another embodiment, a photovoltaic plant power curve measurement system comprises a monitoring system configured to determine normalized irradiation data in response to an algorithmic software based on measured or calculated irradiance at one or more desired PV plant locations, and further configured to measure PV plant electrical power and generate an estimated power curve map for the PV plant as a function of the normalized irradiation data and the measured PV plant electrical power, such that corresponding power curve data can be compared to at least one of historical, theoretical, or simulated power curve data based on normalized irradiation data for the PV plant to detect degradation of the PV plant in a desired time frame.

According to still another embodiment, a photovoltaic (PV) plant signal curve measurement system comprises a monitoring system configured to determine normalized irradiation data in response to an algorithmic software based on measured or calculated irradiance at one or more desired PV plant locations, and further configured to measure desired PV plant electrical signals and generate an estimated signal curve map for the PV plant as a function of the normalized irradiation data and the measured PV plant electrical signals, such that corresponding PV plant electrical signal data can be compared to at least one of historical, theoretical or simulated PV plant electrical signal data based on normalized irradiation data for the PV plant to detect degradation of at least a portion of the PV plant in a desired time frame.

Various features, aspects, and advantages of the present invention will become better understood when the following detailed description is read with reference to the accompanying drawings in which like characters represent like parts throughout the drawings, wherein:
Figure 1 illustrates a photovoltaic plant power curve measurement and health monitoring system according to one embodiment; and
Figure 2 illustrates a method of monitoring the health of the photovoltaic plant shown in Figure 1 according to one embodiment.

While the above-identified drawing figures set forth alternative embodiments, other embodiments of the present invention are also contemplated, as noted in the discussion. In all cases, this disclosure presents illustrated embodiments of the present invention by way of representation and not limitation. Numerous other modifications and embodiments can be devised by those skilled in the art which fall within the scope and spirit of the principles of this invention.

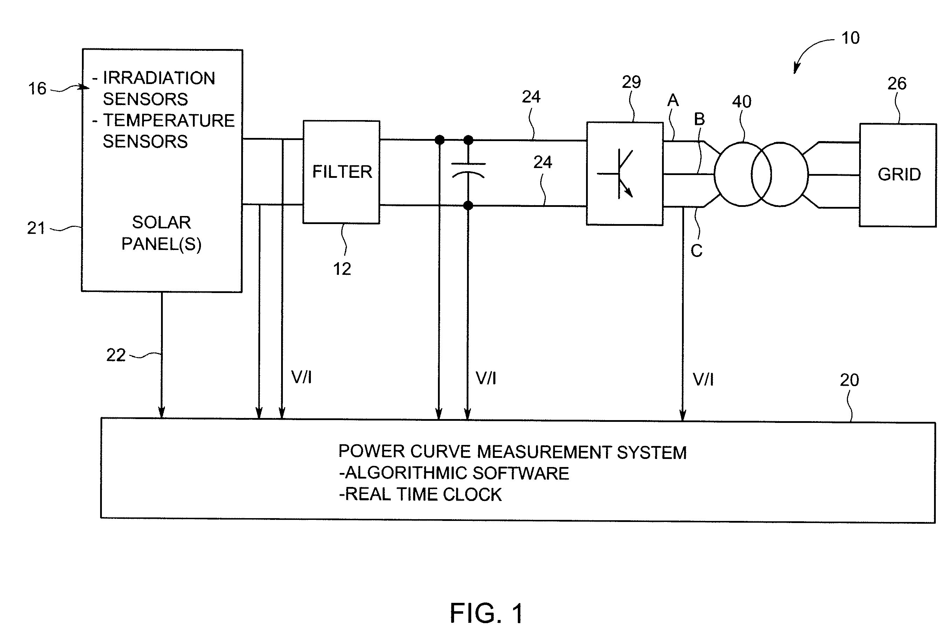

Figure 1 illustrates a photovoltaic plant 10 configured with a power curve measurement and health monitoring system 20 according to one embodiment. Photovoltaic plant 10 includes a power converter 29, and a power transformer 40 that together are configured to supply energy to an AC power grid 26. Power converter 29 is configured to receive electrical energy from one or more solar panels 21 and deliver converted electrical energy to the power grid 26.

Power curve measurement and health monitoring of the photovoltaic plant 10 according to particular embodiments may be based on electrical voltage and/or current measurements between the filter 12 and the PV solar panel(s) 21, between the filter 12 and the converter 29, between the converter 29 and the power grid 26, or combinations thereof. Measurements between the filter 12 and the PV panel(s) 21 are particularly useful when implementing a stand-alone system. Measurements between the filter 29 and the converter 29, and measurements between the converter 29 and the power grid 26 are particularly useful when implementing inverter integrated solutions. Electrical measurements can be, for example, based on DC inputs of the converter 29, AC outputs of the converter 29, or combinations thereof.

A stand-alone embodiment is particularly useful for use with substantially all types and makes of PV inverters. A stand-alone embodiment may also be installed temporarily to provide power curve measurement as a service. According to another embodiment, the power curve monitor (measurement system) 20 is integrated with a PV inverter. The integrated solution is particularly useful since all electrical data is already available, and only environmental measurement sensors, e.g. irradiation, temperature, and the like, need to be connected into the measurement system.

According to one embodiment, the photovoltaic power curve measurement system 20 is directed by algorithmic software that may be integrated therein to determine normalized irradiation data based on measured solar panel 21 temperatures at one or more locations, measured solar panel 21 irradiation, time of day, and plant 10 geographic location. In one embodiment, irradiation is in the plane of one or more solar panels 21. Power curve measurement system monitor 20 then generates an estimated power curve map of corresponding photovoltaic plant 10 electrical output power as a function of the normalized irradiation data. One technical effect is the corresponding power curve data can then be compared to one or more of historical, theoretical, or simulated normalized irradiation data for the photovoltaic plant 10 to detect degradation of the photovoltaic plant 10 in a desired time frame (period of time).

According to one embodiment, the photovoltaic power curve measurement system further includes solar panel temperature and irradiation sensors 16 to provide the solar panel temperature and irradiation information. Measured data is communicated between sensors 16 and plant monitor 20 via dedicated signal bus 22 or other suitable means such as wireless communication. Plant 10 geographic location is known or can be determined, for example, using one or more GPS sensors (not shown). Time of day can be determined, for example, via a real time clock that is included as one portion of the plant monitor 20.

Global position, time, etc. data can be used to calculate or determine the irradiance and the angle of incidence from global irradiance. According to one embodiment, one or more sensors capable of providing the foregoing information directly can be employed to provide one workable solution. Sensors can be located in the plane of one or more PV panels 21 according to one aspect of the invention.

Plant monitor 20 may include, without limitation, a data processing unit such as a CPU or a DSP, among others, in combination with any number of suitable memory units, including without limitation, RAM, ROM, EEPROM, and so forth. The algorithmic hardware/software may further include ASICs, ADCs, DACs, line drivers, logic devices, buffers, and any other suitable hardware/firmware devices suitable to implement the methods described herein.

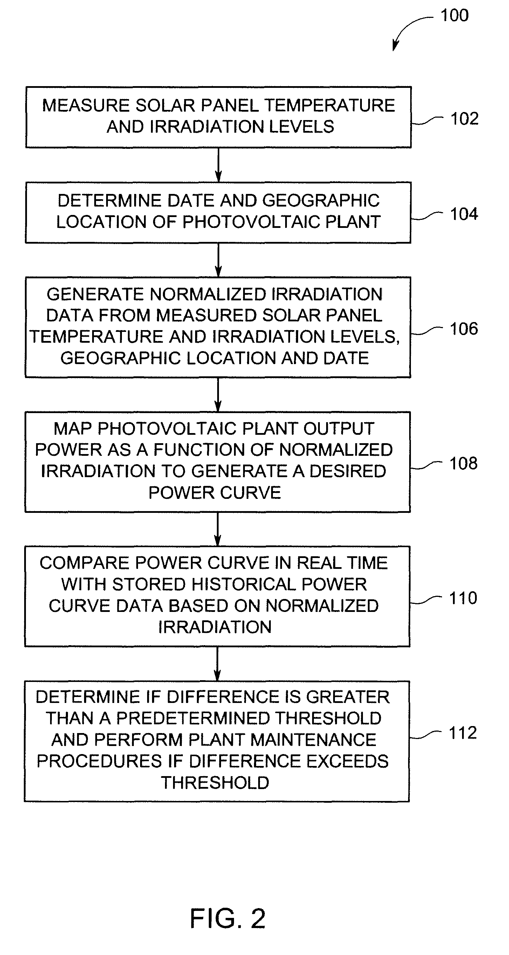

When the photovoltaic power curve measurement system is configured as described herein with reference to Figures 1 and 2, the plant monitor 20 will function to provide an overall photovoltaic plant health monitoring scheme that advantageously is capable of detecting plant degradation quickly within a short timeframe from a few day to weeks. Action can then be taken to clean solar panels, repair connections, tune maximum power point (MPP) tracking, and so on, to maximize photovoltaic plant 10 output power. According to one aspect, the photovoltaic power curve measurement system is integrated with an existing photovoltaic plant. According to another aspect, the photovoltaic power curve measurement system is implemented as a stand-alone system. According to another aspect, the photovoltaic power curve measurement system is inverter integrated.

According to one embodiment, the photovoltaic (PV) power curve measurement system employs a statistical approach to provide estimated plant output power based on measured and historical irradiation and temperature data, and includes all power conversion steps from PV panels, DC collectors, MPP tracking, and so on. Those skilled in the relevant art will readily appreciate that substantially any type of algorithm, e.g. neuro, genetic, fuzzy, and so on, can be employed to maintain the corresponding database and to discriminate between slow changes (e.g. aging) and fast changes (e.g. defects, dirt, etc.)

In summary explanation, a system and method for monitoring and analyzing a complete power generation and processing chain associated with a PV plant installation employs measurements and statistical processing techniques to measure and monitor the PV plant power curve(s). The operating conditions of the PV plant, e.g. solar panel temperature, irradiation, time of day and geographical location, are used to calculate normalized irradiation data. In this manner, the entire power generation process associated with the PV plant can be analyzed by mapping the PV plant electrical output power to the normalized irradiation data. Algorithmic software analyzes the normalized PV plant input and the electrical output power to realize a power curve providing electrical output as a function of the normalized input. This power curve may be compared to historical, theoretic, and/or simulated data stored to detect degradation of the PV plant 10. If degradation is detected, an early warning may be issued, and maintenance or more detailed analysis can be scheduled. According to one aspect, the calculated power curve may be compared with other PV plant installations to prove a relative performance indicator. Additional measurement and/or estimated data including, for example, and without limitation, DC current and voltage at inverter inputs or DC current of single hardware strings or at combiner box outputs can be used to provide a more detailed analysis of the PV plant 10.

Figure 2 illustrates a method 100 of monitoring the health of the photovoltaic plant 10 shown in Figure 1 according to one embodiment. The method 100 commences by interrogating solar panel temperature and irradiation sensors 16 to capture solar panel 21 temperature and irradiation levels as represented in block 102. PV plant geographical position and the date of sensor measurements are also recorded as represented in block 104. The geographical position and date measurements represented in block 104 are optional, depending upon the type of irradiation sensor(s) employed. Normalized irradiation data is next generated using the measured solar panel temperature and irradiation level data, geographic location and date as represented in block 106. Photovoltaic plant output power is measured and correlated (mapped) versus the normalized irradiation data to generate an estimated PV plant power curve as represented in block 108. If the foregoing process has been previously performed at least once, then the calculated plant power curve can be compared in real time with the stored historical power curve data based on normalized irradiation as represented in block 110. According to other embodiments, the calculated plant power curve can be compared to stored theoretical power curve data or store simulated power curve data. Differences between the presently calculated power curve and the stored power curve(s) can then be used to determine if plant maintenance procedures or other desired procedures should be employed as represented in block 112.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiment of the present invention are defined by the following numbered clauses:
1. A photovoltaic (PV) plant power curve measurement system comprising:
   one or more solar panels;
   a power grid;
   one or more power converters configured to receive DC power from the one or more solar panels and deliver AC electrical power to the power grid; and
   a monitoring system configured to determine normalized irradiation data in response to an algorithmic software based on measured or calculated irradiance at one or more desired PV plant locations, and further configured to measure PV plant electrical power and generate an estimated power curve map for the PV plant as a function of the normalized irradiation data and the measured PV plant electrical power, such that corresponding power curve data can be compared to historical, theoretical, or simulated power curve data based on normalized irradiation data for the PV plant to detect degradation of the PV plant in a desired time frame.
2. The PV plant power curve measurement system according to clause 1, wherein the monitoring system comprises one or more irradiation sensors selected from a global irradiation type sensor, a solar cell type irradiation sensor, and an irradiation sensor comprising PV array technology, wherein the measured or calculated irradiance is based on electrical signals generated via the one or more irradiation sensors.
3. The PV plant power curve measurement system according to any preceding clause, wherein the monitoring system is further configured to provide an indication for performing desired PV plant maintenance operations when the difference between corresponding power curve data and historical, theoretical or simulated power curve data exceeds a predetermined magnitude.
4. The PV plant power curve measurement system according to any preceding clause, wherein the monitoring system is further configured to compare the corresponding power curve data to power curve data associated with different PV plants to generate a relative performance indicator there from.
5. The PV plant power curve measurement system according to any preceding clause, wherein the monitoring system is further configured to measure desired PV plant electrical signals and generate an estimated signal curve map for the PV plant as a function of the normalized irradiation data and the measured PV plant electrical signals, such that corresponding PV plant electrical signal data can be compared to historical, theoretical, or simulated PV plant electrical signal data based on normalized irradiation data for the PV plant to detect degradation of at least a portion of the PV plant in a desired time frame.
6. The PV plant power curve measurement system according to any preceding clause, wherein the desired PV plant electrical signals are selected from inverter input current, inverter output current, inverter input voltage, inverter output voltage, inverter input filter input current, inverter input filter input voltage, DC current of single strings, and DC current at combiner boxes.
7. The PV plant power curve measurement system according to any preceding clause, wherein the PV plant is divided into a plurality of subsystems, each subsystem having its own power curve measurement system, such that corresponding subsystem power curves can be compared between the individual subsystems.
8. The PV plant power curve measurement system according to any preceding clause, wherein the algorithmic software is selected from a neuro network algorithm, a genetic algorithm, a fuzzy algorithm, and a predictive control algorithm.
9. The PV plant power curve measurement system according to any preceding clause, wherein the algorithmic software is configured to maintain and update a database comprising the normalized irradiation data and the PV plant electrical power and further configured to discriminate between database changes relating to aging and database changes relating to system operational defects.
10. The PV plant power curve measurement system according to any preceding clause, wherein the normalized irradiation data comprises temperature data.
11. A photovoltaic (PV) plant signal curve measurement system comprising:
   one or more solar panels;
   a power grid;
   one or more power converters configured to receive DC power from the one or more solar panels and deliver AC power to the power grid; and
   a monitoring system configured to determine normalized irradiation data in response to an algorithmic software based on measured or calculated irradiance at one or more desired PV plant locations and further configured to measure desired PV plant electrical signals and generate an estimated signal curve map for the PV plant as a function of the normalized irradiation data and the measured PV plant electrical signals, such that corresponding PV plant electrical signal data can be compared to historical, theoretical, or simulated PV plant electrical signal data based on normalized irradiation data for the PV plant to detect degradation of at least a portion of the PV plant in a desired time frame.
12. The PV plant power curve measurement system according to any preceding clause, wherein the monitoring system comprises one or more irradiation sensors selected from a global irradiation type sensor, a solar cell type irradiation sensor, and an irradiation sensor comprising PV array technology, wherein the measured or calculated irradiance is based on electrical signals generated via the one or more irradiation sensors.
13. The PV plant power curve measurement system according to any preceding clause, wherein the monitoring system is further configured to provide an indication for performing desired PV plant maintenance operations when the difference between corresponding electrical signal data for the PV plant and historical, theoretical, or simulated electrical signal data for the PV plant exceeds a predetermined magnitude.
14. The PV plant power curve measurement system according to any preceding clause, wherein the monitoring system is further configured compare corresponding PV plant electrical signal data to electrical signal data associated with different PV plants and to generate a relative performance indicator there from.
15. The PV plant power curve measurement system according to any preceding clause, wherein the monitoring system is further configured to measure PV plant power and generate an estimated power curve map for the PV plant as a function of the normalized irradiation data and the measured PV plant power, such that corresponding PV plant power data can be compared to historical, theoretical, or simulated PV plant power data based on normalized irradiation data for the PV plant to detect degradation of at least a portion of the PV plant in a desired time frame.
16. The PV plant power curve measurement system according to any preceding clause, wherein the desired PV plant electrical signals are selected from inverter input current, inverter input voltage, inverter output current, inverter output voltage, inverter input filter input current, inverter input filter input voltage, DC current of single strings, and DC current at combiner boxes.
17. The PV plant power curve measurement system according to any preceding clause, wherein the algorithmic software is selected from a neuro network algorithm, a genetic algorithm, a fuzzy algorithm, and a predictive control algorithm.
18. The PV plant power curve measurement system according to any preceding clause, wherein the algorithmic software is configured to maintain and update a database comprising the normalized irradiation data and the desired PV plant electrical signals and further configured to discriminate between database changes relating to aging and database changes relating to system operational defects.
19. The PV plant power curve measurement system according to any preceding clause, wherein the normalized irradiation data comprises temperature data.
20. The PV plant power curve measurement system according to any preceding clause, wherein the PV plant is divided into a plurality of subsystems, each subsystem having its own signal curve measurement system, such that corresponding subsystem signal curves can be compared between the individual subsystems.
21. A photovoltaic (PV) plant power curve measurement system comprising a monitoring system configured to determine normalized irradiation data in response to an algorithmic software based on measured or calculated irradiance at one or more desired PV plant locations and further configured to measure PV plant electrical power and generate an estimated power curve map for the PV plant as a function of the normalized irradiation data and the measured PV plant electrical power, such that corresponding power curve data can be compared to historical, theoretical, or simulated power curve data based on normalized irradiation data for the PV plant to detect degradation of the PV plant in a desired time frame.
22. The PV plant power curve measurement system according to any preceding clause, wherein the monitoring system comprises one or more irradiation sensors selected from a global irradiation type sensor, a solar cell type irradiation sensor, and an irradiation sensor comprising PV array technology, wherein the measured or calculated irradiance is based on electrical signals generated via the one or more irradiation sensors.
23. The PV plant power curve measurement system according to any preceding clause, wherein the monitoring system is further configured to provide an indication for performing desired PV plant maintenance operations when the difference between corresponding power curve data for the PV plant and historical, theoretical, or simulated power curve data for the PV plant exceeds a predetermined magnitude.
24. The PV plant power curve measurement system according to any preceding clause, wherein the monitoring system comprises one or more irradiation sensors selected from a global irradiation type sensor, a solar cell type irradiation sensor, and an irradiation sensor comprising PV array technology, wherein the measured or calculated irradiance is based on electrical signals generated via the one or more irradiation sensors.
25. The PV plant power curve measurement system according to any preceding clause, wherein the monitoring system is further configured to compare the corresponding power curve data to power curve data associated with different PV plants and to generate a relative performance indicator there from.
26. The PV plant power curve measurement system according to any preceding clause, wherein the monitoring system is further configured to measure desired PV plant electrical signals and generate an estimated signal curve map for the PV plant as a function of the normalized irradiation data and the measured PV plant electrical signals, such that corresponding PV plant electrical signal data can be compared to historical, theoretical, or simulated PV plant electrical signal data based on normalized irradiation data for the PV plant to detect degradation of at least a portion of the PV plant in a desired time frame.
27. The PV plant power curve measurement system according to any preceding clause, wherein the desired PV plant electrical signals are selected from inverter input current, inverter input voltage, inverter output current, inverter output voltage, inverter input filter input current, inverter input filter input voltage, DC current of single strings, and DC current at combiner boxes.
28. The PV plant power curve measurement system according to any preceding clause, wherein the algorithmic software is selected from a neuro network algorithm, a genetic algorithm, a fuzzy algorithm, and a predictive control algorithm.
29. The PV plant power curve measurement system according to any preceding clause, wherein the algorithmic software is configured to maintain and update a database comprising the normalized irradiation data and the PV plant electrical power and further configured to discriminate between database changes relating to aging and database changes relating to system operational defects.
30. The PV plant power curve measurement system according to any preceding clause, wherein the normalized irradiation data comprises temperature data.
31. The PV plant power curve measurement system according to any preceding clause, wherein the PV plant is divided into a plurality of subsystems, each subsystem having its own power curve measurement system, such that corresponding subsystem power curves can be compared between the individual subsystems.
32. A photovoltaic (PV) plant signal curve measurement system comprising a monitoring system configured to determine normalized irradiation data in response to an algorithmic software based on measured or calculated irradiance at one or more desired PV plant locations, and further configured to measure desired PV plant electrical signals and generate an estimated signal curve map for the PV plant as a function of the normalized irradiation data and the measured PV plant electrical signals, such that corresponding PV plant electrical signal data can be compared to historical, theoretical, or simulated PV plant electrical signal data based on normalized irradiation data for the PV plant to detect degradation of at least a portion of the PV plant in a desired time frame.
33. The PV plant power curve measurement system according to any preceding clause, wherein the monitoring system comprises one or more irradiation sensors selected from a global irradiation type sensor, a solar cell type irradiation sensor, and an irradiation sensor comprising PV array technology, wherein the measured or calculated irradiance is based on electrical signals generated via the one or more irradiation sensors.
34. The PV plant signal curve measurement system according to any preceding clause, wherein the monitoring system is further configured to provide an indication for performing desired PV plant maintenance operations when the difference between corresponding signal curve data for the PV plant and the historical, theoretical, or simulated signal curve data based on normalized irradiation data for the PV plant exceeds a predetermined magnitude.
35. The PV plant signal curve measurement system according to any preceding clause, wherein the monitoring system is further configured to compare the corresponding signal curve data signal curve data associated with different PV plants and to generate a relative performance indicator there from.
36. The PV plant signal curve measurement system according to any preceding clause, wherein the monitoring system is further configured to measure desired PV plant electrical power and generate an estimated power curve map for the PV plant as a function of the normalized irradiation data and the measured PV plant power, such that corresponding PV plant power curve data can be compared to historical, theoretical, or simulated PV plant power curve data based on normalized irradiation data for the PV plant to detect degradation of at least a portion of the PV plant in a desired time frame.
37. The PV plant signal curve measurement system according to any preceding clause, wherein the desired PV plant electrical signals are selected from inverter input current, inverter input voltage, inverter output current, inverter output voltage, inverter input filter input current, inverter input filter input voltage, DC current of single strings, and DC current at combiner boxes.
38. The PV plant power curve measurement system according to any preceding clause, wherein the algorithmic software is selected from a neuro network algorithm, a genetic algorithm, a fuzzy algorithm, and a predictive control algorithm.
39. The PV plant power curve measurement system according to any preceding clause, wherein the algorithmic software is configured to maintain and update a database comprising the normalized irradiation data and the PV plant desired electrical signals and further configured to discriminate between database changes relating to aging and database changes relating to system operational defects.
40. The PV plant power curve measurement system according to any preceding clause, wherein the PV plant is divided into a plurality of subsystems, each subsystem having its own signal curve measurement system, such that corresponding subsystem signal curves can be compared between the individual subsystems.
41. The PV plant power curve measurement system according to any preceding clause, wherein the normalized irradiation data comprises temperature data.

## Claims

1. A photovoltaic (PV) plant (10) power curve measurement system comprising:
one or more solar panels (21);
a power grid (26);
one or more power converters (29) configured to receive DC power from the one or more solar panels (21) and deliver AC electrical power to the power grid (26); and
a monitoring system (20) configured to determine normalized irradiation data in response to an algorithmic software based on measured or calculated irradiance at one or more desired PV plant (10) locations, and further configured to measure PV plant (10) electrical power and generate an estimated power curve map for the PV plant (10) as a function of the normalized irradiation data and the measured PV plant (10) electrical power, such that corresponding power curve data can be compared to historical, theoretical, or simulated power curve data based on normalized irradiation data for the PV plant (10) to detect degradation of the PV plant (10) in a desired time frame.

2. The PV plant (10) power curve measurement system according to claim 1, wherein the monitoring system (20) comprises one or more irradiation sensors (16) selected from a global irradiation type sensor, a solar cell type irradiation sensor, and an irradiation sensor comprising PV array technology, wherein the measured or calculated irradiance is based on electrical signals generated via the one or more irradiation sensors (16).

3. The PV plant (10) power curve measurement system according to any preceding claim, wherein the monitoring system (20) is further configured to provide an indication for performing desired PV plant maintenance operations when the difference between corresponding power curve data and historical, theoretical or simulated power curve data exceeds a predetermined magnitude.

4. The PV plant (10) power curve measurement system according to any preceding claim, wherein the monitoring system (20) is further configured to compare the corresponding power curve data to power curve data associated with different PV plants to generate a relative performance indicator there from.

5. The PV plant (10) power curve measurement system according to any preceding claim, wherein the monitoring system (20) is further configured to measure desired PV plant (10) electrical signals and generate an estimated signal curve map for the PV plant (10) as a function of the normalized irradiation data and the measured PV plant (10) electrical signals, such that corresponding PV plant (10) electrical signal data can be compared to historical, theoretical, or simulated PV plant (10) electrical signal data based on normalized irradiation data for the PV plant (10) to detect degradation of at least a portion of the PV plant (10) in a desired time frame.

6. The PV plant (10) power curve measurement system according to claim 5, wherein the desired PV plant (10) electrical signals are selected from inverter (29) input current, inverter (29) output current, inverter (29) input voltage, inverter (29) output voltage, inverter (29) input filter (12) input current, inverter (29) input filter (12) input voltage, DC current of single strings, and DC current at combiner boxes.

7. The PV plant (10) power curve measurement system according to any preceding claim, wherein the PV plant (10) is divided into a plurality of subsystems, each subsystem having its own power curve measurement system, such that corresponding subsystem power curves can be compared between the individual subsystems.

8. The PV plant (10) power curve measurement system according to any preceding claim, wherein the algorithmic software is selected from a neuro network algorithm, a genetic algorithm, a fuzzy algorithm, and a predictive control algorithm.

9. The PV plant (10) power curve measurement system according to any preceding claim, wherein the algorithmic software is configured to maintain and update a database comprising the normalized irradiation data and the PV plant (10) electrical power and further configured to discriminate between database changes relating to aging and database changes relating to system operational defects.

10. The PV plant (10) power curve measurement system according to any preceding claim, wherein the normalized irradiation data comprises temperature data.
